# EUROPÄISCHE PATENTSCHRIFT

(11) **EP 2 028 050 B1**
(45) Veröffentlichungstag und Bekanntmachung des Hinweises auf die Patenterteilung: **06.06.2012**
(21) Anmeldenummer: 08013317.6
(22) Anmeldetag: 24.07.2008
(51) Int. Cl.: B60R 5/04

(54) **Ladegutsicherungsvorrichtung für einen Laderaum eines Kraftfahrzeugs**
Cargo securing device for a cargo space in a motor vehicle
Dispositif de fixation d'une charge pour un espace de chargement d'un véhicule automobile

(30) Priorität: 20.08.2007 DE 102007040372
(43) Veröffentlichungstag der Anmeldung: 25.02.2009
(73) Patentinhaber: BOS GmbH & Co. KG, 73760 Ostfildern (DE)
(72) Erfinder: Bohlke, Hartmut, 42369 Wuppertal (DE); Göbbels, Andreas, 51515 Kürten (DE); Salewski, Jürgen, 40599 Düsseldorf (DE); Sitzler, Wolfgang, 42111 Wuppertal (DE)
(74) Vertreter: Patentanwälte Ruff, Wilhelm, Beier, Dauster & Partner

(56) Entgegenhaltungen:
- DE-A1- 10 202 914
- DE-A1-102004 035 878
- DE-A1-102004 041 763
- DE-A1-102005 031 072

## Beschreibung

Die Erfindung betrifft eine Ladegutsicherungsvorrichtung für einen Laderaum eines Kraftfahrzeugs mit einer Trägeranordnung, die eine flache Erstreckung längs und quer des Laderaumes aufweist, und die in wenigstens zwei zueinander parallelen Lastschienen innerhalb des Laderaumes längs eines Laderaumbodens verschiebbar gelagert ist, wobei jeder Lastschiene wenigstens ein Führungsschlitten zugeordnet ist, die gemeinsam die Trägeranordnung tragen.

Eine derartige Ladegutsicherungsvorrichtung ist aus der DE 10 2005 031 072 A1 bekannt. Die bekannte Ladegutsicherungsvorrichtung weist eine als Trägeranordnung dienende Ladebodenplatte auf, die in Lastschienen längs des Laderaumbodens verschiebbar gelagert ist. Zur Lagerung der Ladebodenplatte an den Lastschienen sind mehrere Führungsschlitten vorgesehen, die an der Unterseite der Ladebodenplatte angeordnet sind.

Aufgabe der Erfindung ist es, eine Ladegutsicherungsvorrichtung der eingangs genannten Art zu schaffen, die eine verbesserte Funktion und Handhabung durch eine Bedienperson ermöglicht.

Diese Aufgabe wird dadurch gelöst, dass die Führungsschlitten über einen Teilbereich der Länge der Trägeranordnung erstreckt sind, und dass radial - auf eine Längsachse der Lastschiene bezogen - versetzt zu den Führungsschlitten wenigstens ein Stützelement im Bereich einer Unterseite der Trägeranordnung vorgesehen ist, das - auf eine Längsachse der Lastschiene bezogen - in axialem Abstand zu den Führungsschlitten angeordnet ist, wobei das Stützelement dazu vorgesehen ist, Kippmomente, die auf die Trägeranordnung wirken, abzustützen. Durch die erfindungsgemäße Lösung ist es möglich, die Führungsschlitten lediglich über einen Teilbereich der Länge der Trägeranordnung zu deren Abstützung heranzuziehen. Die Abstützung der Trägeranordnung in einem von den Führungsschlitten abliegenden Bereich wird durch das wenigstens eine Stützelement vorgenommen. Erfindungsgemäß kann somit für jede Lastschiene lediglich ein einzelner Führungsschlitten an der Trägeranordnung vorgesehen sein, da die übrige axiale Länge, in der die Trägeranordnung nicht von den Führungsschlitten getragen wird, durch das wenigstens eine Stützelement abgestützt ist. Dadurch werden Kippmomente vermieden, die zu einer Schrägstellung der Trägeranordnung und demzufolge zu einem Lösen der Führungsschlitten aus den Lastschienen führen könnten. Die erfindungsgemäße Lösung eignet sich insbesondere für Ladegutsicherungsvorrichtungen, die in Laderäumen eingesetzt werden, die vollständig von Fahrgasträumen getrennt sind. Dies ist insbesondere der Fall bei Personenkraftwagen mit separaten Koffer- oder Laderäumen, beispielsweise im Bereich eines Stufenhecks.

Die der Erfindung zugrundeliegende Aufgabe wird auch dadurch gelöst, dass jedem Führungsschlitten stirnseitig eine Einführhilfe zugeordnet ist, die über einen Stirnrand des Führungsschlittens oder der Trägeranordnung in Verlängerung zu dem Führungsschlitten hinausragt, und die in ihrer Breite auf eine Breite einer korrespondierenden Führungsprofilierung der Lastschiene abgestimmt ist. Die erfindungsgemäße Lösung ermöglicht ein vereinfachtes Einsetzen der Trägeranordnung in ihre Funktionsposition in den Lastschienen. Denn insbesondere dann, wenn die Führungsschlitten unterhalb der Trägeranordnung verborgen angeordnet sind, ist es für eine Bedienperson schwierig, die Trägeranordnung für eine Montage in den Lastschienen zu handhaben. Wenn die Einführhilfen stirnseitig über die Trägeranordnung hinausragen, sind diese auch von oben her sichtbar, so dass die Bedienperson eine einfache Ausrichtung der Einführhilfen zu den Führungsprofilierungen, insbesondere Führungsnuten, der Lastschienen vornehmen und demzufolge eine einfache Positionierung der Führungsschlitten in den Lastschienen bewirken kann.

In Ausgestaltung der Erfindung ist die Einführhilfe als mit dem jeweiligen Führungsschlitten verbundener formstabiler Fortsatz gestaltet, dessen Breite etwas geringer ist als eine Breite einer als Führungsprofilierung dienenden Führungsnut der Lastschiene. Vorzugsweise ist der Fortsatz einstückiger Teil des Führungsschlittens. Es ist aber auch möglich, den Fortsatz als separates Teil zu gestalten und dieses an dem Führungsschlitten oder direkt an einer Unterseite der Trägeranordnung zu befestigen.

In weiterer Ausgestaltung der Erfindung ist die Einführhilfe mit wenigstens einem Rastelement versehen, das eine in die Führungsnut eingetauchte Funktionsposition der Einführhilfe formschlüssig sichert. Dieses Rastelement verhindert ein Lösen der Einführhilfe aus der Führungsnut in ihrem eingesetzten Zustand.

In weiterer Ausgestaltung der Erfindung ist das Rastelement als federbelastet beweglicher Rastknopf ausgeführt. Dieser Rastknopf kann als Kraftbegrenzer wirken, der bei zu hohen Belastungen zurückgedrückt wird und so das Freikommen der Einführhilfe aus der Führungsnut ermöglicht. Vorzugsweise ist der Rastknopf als kugel- oder halbkugelförmiger Taster ausgeführt, der mit einem Teilbereich seiner Kugeloberfläche seitlich aus dem als Einführhilfe dienenden Fortsatz herausragt.

In weiterer Ausgestaltung der Erfindung ist das wenigstens eine Stützelement in einem mittleren Bereich der Trägeranordnung vorgesehen. Das wenigstens eine Stützelement spannt bei einer derartigen Anordnung gemeinsam mit den durch die Führungsschlitten definierten Stützpunkten für die Trägeranordnung ein imaginäres Dreieck zur Abstützung der Trägeranordnung nach unten auf. Diese Dreipunktabstützung ist vorteilhaft, da Toleranzen der Trägeranordnung oder der Auflagebereiche am Laderaumboden ausgeglichen werden können.

In weiterer Ausgestaltung der Erfindung ist das wenigstens eine Stützelement im Bereich einer Unterseite eines Griffabschnittes der Trägeranordnung vorgesehen. In vorteilhafter Weise ist der Griffabschnitt der Trägeranordnung in einem mittleren, einer Laderaumöffnung zugewandten Bereich der Trägeranordnung vorgesehen.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in perspektivischer Darstellung eine Ausführungsform einer erfindungsgemäßen Ladegutsicherungsvorrichtung in einem Laderaum eines Personenkraftwagens,
- Fig. 2: eine Trägeranordnung in Form einer Ladebodenplatte in perspektivischer, vergrößerter Darstellung von unten,
- Fig. 3: einen Führungsschlitten der Ladebodenplatte nach Fig. 2 und
- Fig. 4: eine weitere Ladebodenplatte in einer Darstellung ähnlich Fig. 2.

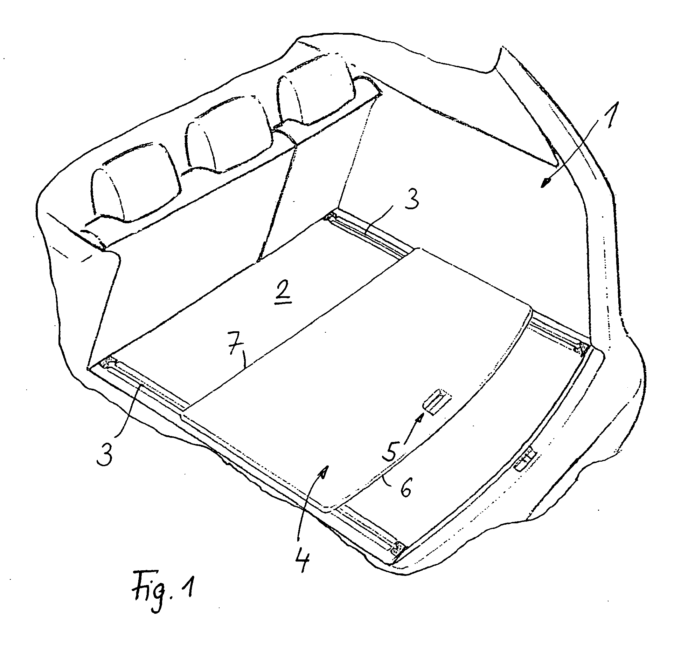

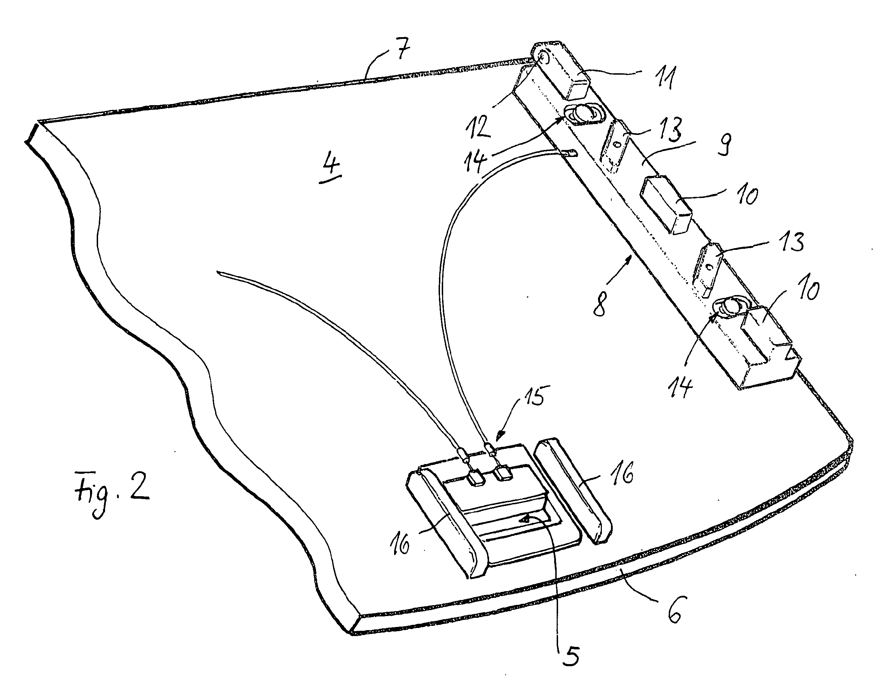

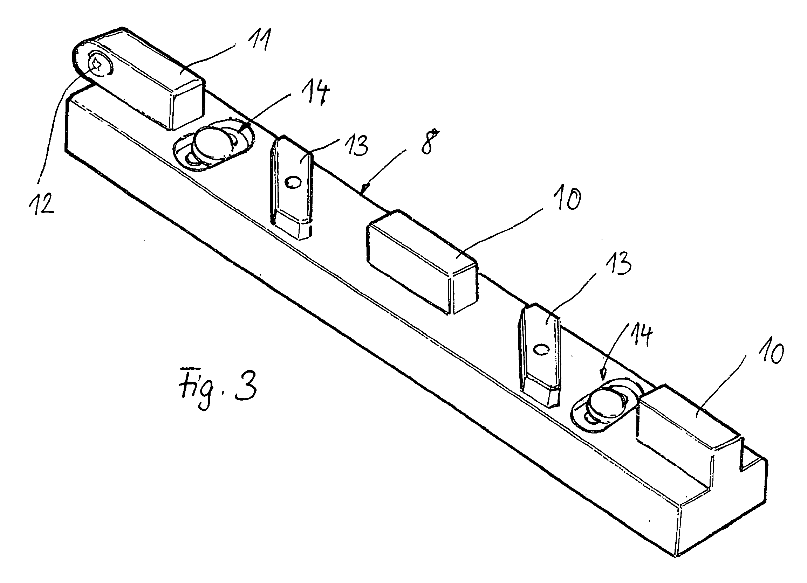

Eine Ladegutsicherungsvorrichtung gemäß den Fig. 1 bis 3 ist in einem Laderaum 1 eines Personenkraftwagens angeordnet. Der Laderaum 1 ist heckseitiger Teil eines Fahrzeuginnenraumes und geht in normaler Fahrtrichtung nach vorne über in einen Fahrgastraum. Bei einer nicht dargestellten Ausführungsform der Erfindung wird der Laderaum durch einen geschlossenen Kofferraum gebildet, der vollständig getrennt von einem Fahrgastraum in dem Personenkraftwagen untergebracht ist. Alle übrigen, nachfolgend beschriebenen Merkmale treffen für den geschlossenen und separaten Kofferraum in gleicher Weise zu wie für den in Fig. 1 dargestellten, offenen Laderaum 1. Der Laderaum 1 weist als bodenseitige Laderaumbegrenzungsfläche einen Laderaumboden 2 auf, der eben gestaltet ist. In den Laderaumboden 2 sind zwei Lastschienen 3 eingelassen, die als Führungsschienen für die Längsverschiebbarkeit einer Trägeranordnung 4 bis 7 dienen. Die beiden Lastschienen 3 sind auf gegenüberliegenden Längsseiten des Laderaumbodens 2 angeordnet und erstrecken sich parallel zueinander in Fahrzeuglängsrichtung. Beide Lastschienen 3 sind mit einer nach oben offenen Führungsnut versehen, in der die Trägeranordnung 4 bis 7 mit Hilfe von Führungsschlitten 8 (Fig. 2 und 3) längs verfahrbar gelagert ist.

Die Trägeranordnung 4 bis 7 weist eine ebene Ladebodenplatte 4 auf, die sich über die gesamte Breite des Laderaumbodens 2 erstreckt. Die Ladebodenplatte 4 ist zudem über etwa die Hälfte der Länge des Laderaumbodens 2 erstreckt. Die Ladebodenplatte 4 ist formstabil und eben ausgeführt und kann in nicht näher dargestellter Weise mit Aufnahmen oder Halterungen zur Sicherung von Ladegut versehen sein.

Um die Ladebodenplatte 4 in den Lastschienen 3 verschieben zu können, sind an der Unterseite der Ladebodenplatte 4 auf Höhe der jeweiligen Lastschiene 3 insgesamt zwei Führungsschlitten 8 befestigt, von denen in Fig. 2 lediglich der in normaler Funktionsposition der Ladebodenplatte 4 linke Funktionsschlitten 8 gezeigt ist. Der nicht dargestellte rechte Funktionsschlitten ist analog ausgeführt, so dass der Einfachheit halber auf die Ausführungen zu den dargestellten Führungsschlitten 8 verwiesen wird. Der Führungsschlitten 8 weist einen quaderförmigen, längs erstreckten Schlittenblock auf, der über etwa zwei Drittel der Länge der Ladebodenplatte 4 erstreckt ist. Die Breite des Schlittenblockes und damit auch die Breite des Führungsschlittens 8 entspricht in etwa der Breite der zugeordneten, fahrzeugfesten Lastschiene 3. Der Führungsschlitten 8 weist insgesamt drei in einer gemeinsamen Flucht zueinander beabstandete Führungssteine 10, 11 auf, deren Breite derart auf die Breite der Führungsnut der zugeordneten Lastschiene 3 abgestimmt ist, dass eine Linearführung für eine Längsverschiebung der Ladebodenplatte 4 in den Lastschienen 3 erzielt wird. Die Führungsschlitten 8 weisen zudem zwei Gleitflächen 13 auf, die aus einem Material mit einem geringeren Reibungskoeffizienten versehen sind, um ein leichtgängiges Gleiten des Führungsschlittens 8 auf der Oberseite der entsprechenden Lastschiene 3 und damit auf den Flächenabschnitten der Lastschiene 3 zu ermöglichen, die die Führungsnut beidseitig flankieren (Fig. 1).

Der Führungsschlitten 8 ist nicht starr an der Unterseite der Ladebodenplatte 4, sondern vielmehr begrenzt in Querrichtung schwimmend gelagert. Hierzu sind zwei Schwimmlager 14 vorgesehen, die den Führungsschlitten 8 an der Unterseite der Ladebodenplatte 4 axial - auf eine Längsachse des Führungsschlittens 8 und der zugeordneten Lastschiene 3 bezogen - sichern, gleichzeitig aber quer zur Längsachse der Lastschiene 3 eine Beweglichkeit des Führungsschlittens 8 zulassen. Dadurch ist es möglich, Toleranzen bei der Montage und Ausrichtung der Führungsschlitten 8 relativ zu den Lastschienen 3 und relativ zur Ladebodenplatte 4 auszugleichen.

Die Ladebodenplatte 4 ist mit einer in normaler Funktionsposition der Ladebodenplatte 4 zu einem Fahrzeugheck gewandten Heckkante 6 und entsprechend gegenüberliegend mit einer Frontkante 7 versehen.

Um ein Einsetzen der Ladebodenplatte 4 und damit der Führungsschlitten 8 in die Führungsnuten der Lastschienen 3 zu erleichtern, ist ein - in normaler Fahrtrichtung und in Funktionsposition der Ladebodenplatte 4 gesehen - vorderer Führungsstein 11 jedes Führungsschlittens 8 mit einer Einführhilfe in Form eines fingerartigen Fortsatzes versehen, der in der Flucht der Führungssteine 10, 11 über eine vordere Stirnkante des Führungsschlittens 8 nach vorne abragt (Fig. 2 und 3). Dieser Fortsatz ragt bis nahezu zur Frontkante der Ladebodenplatte 4 nach vorne ab. Die Fortsätze an beiden Führungsschlitten 8 ermöglichen es einer Bedienperson, für ein Einsetzen der Ladebodenplatte 4 in die Lastschienen 3 diese schräg aufzustellen und mit den Fortsätzen der vorderen Führungssteine 11 in die Führungsnuten der Lastschiene 3 einzusetzen. Die entsprechende Zentrierung und Ausrichtung der Fortsätze der vorderen Führungssteine 11 in den Lastschienen 3 ermöglicht anschließend ein einfaches Absenken der Ladebodenplatte 4, wodurch zwangsläufig auch die übrigen, weiter hinten liegenden Führungssteine 10 in die entsprechende Führungsnut eintauchen.

Um zu vermeiden, dass der entsprechende Fortsatz des vorderen Führungssteines 11 wieder aus der Führungsnut herausbewegt wird, ist zusätzlich wenigstens ein Rastelement in Form einer radial nach außen federbelasteten Rastkugel 12 vorgesehen, das eine entsprechende, die Führungsnut der Lastschiene nach dem Einsetzen formschlüssig hintergreifende Verrastung bildet. Vorzugsweise ist jeder vordere Führungsstein 11 mit einem Paar von Rastelementen in Form von federbelasteten Rastkugeln 12 versehen, die zu gegenüberliegenden Seiten nach außen abragen. Es ist auch möglich, entsprechende Rastkugeln ohne zusätzliche Federbelastung in entsprechenden Aufnahmen in dem vorderen Führungsstein 11 anzuordnen. Selbstverständlich ist es auch möglich, andere Arten von Rastelementen einzusetzen, um die gewünschte Sicherungsfunktion zu erzielen.

Um unabhängig von einer gewissen Sicherungsfunktion durch wenigstens ein entsprechendes Rastelement 12 im Bereich des jeweiligen, vorderen Führungssteines 11 zu vermeiden, dass bei Druckbelastungen auf die Ladebodenplatte 4 im Bereich der Heckkante 6 ein Kippmoment im Bereich des jeweiligen, rückseitigen Führungssteines 10 ausgeübt wird, sind dem rückseitigen, zentralen Bereich der Unterseite der Ladebodenplatte 4 Stützelemente 16 zugeordnet, deren Höhe etwa der Höhe des Schlittenblockes jedes Führungsschlittens 8 entspricht. Beim Ausführungsbeispiel gemäß Fig. 2 sind zwei Stützelemente 16 vorgesehen, die in Längsrichtung der Ladebodenplatte 4 und damit - auf die eingesetzte Funktionsposition der Ladebodenplatte 4 bezogen - parallel zu den Lastschienen 3 ausgerichtet sind. Die beiden Stützelemente 16 flankieren einen Griffbereich 5, der mit einer Durchgriffsöffnung für das manuelle Ergreifen der Ladebodenplatte 4 durch eine Bedienperson versehen ist. Der Griffbereich 5 ist in einem rückseitigen, etwa auf Höhe einer Mittellängsachse des Laderaumbodens 2 positionierten Bereich der Ladebodenplatte 4 vorgesehen. Dem Griffbereich 5 ist eine bewegliche Handhabe 15 zugeordnet, die über entsprechende Bowdenzüge in nicht näher dargestellter Weise eine Blockier- oder Bremsfunktion im Bereich der Führungsschlitten 8 auslösen kann, um die Ladebodenplatte 4 in der jeweiligen, momentan eingenommenen Funktionsposition relativ zu den Lastschienen 3 axial zu blockieren. Ein Durchgreifen einer Hand einer Bedienperson durch die Durchgriffsöffnung ermöglicht ein Lösen der Handhabe 15, so dass auch die im Ruhezustand der Ladebodenplatte 4 aktive Brems- oder Blockierfunktion aufgehoben wird.
Die Stützelemente 16 sind als blockförmige Gleitelemente, vorzugsweise aus einem Kunststoffmaterial mit geringem Reibungskoeffizienten, ausgeführt und an der Unterseite der Ladebodenplatte 4 befestigt. Sie liegen in der Funktionsposition der Ladebodenplatte 4 entweder auf der Oberfläche des Laderaumbodens 2 auf oder sind in entsprechender Funktionsposition der Ladebodenplatte 4 in äußerst geringem Abstand von vorzugsweise 1 mm bis 5 mm zu der Oberfläche des Laderaumbodens 2 beabstandet. Dadurch wird vermieden, dass eine Bedienperson, die mit ihrer Hand die Durchgriffsöffnung des Griffbereiches 5 durchgreift und von oben her auf die Ladebodenplatte 4 etwa auf Höhe der Heckkante 6 eine Druckbelastung ausübt, eine Kippbewegung der Ladebodenplatte 4 veranlasst.

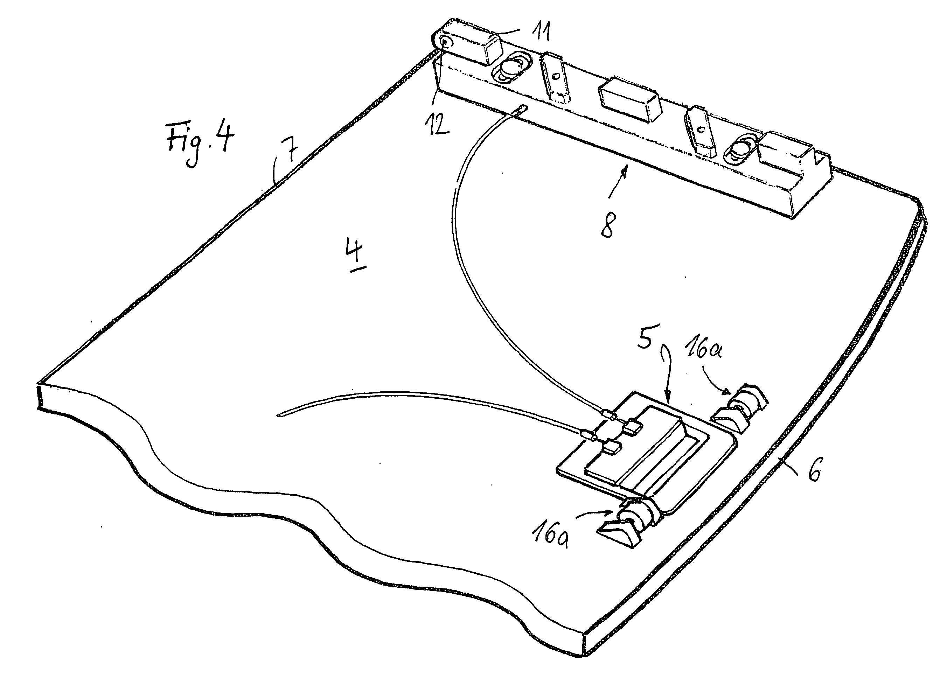

Um diese Stützfunktion beizubehalten und dennoch die zusätzliche Reibung aufgrund der eine weitere Auflagefläche bildenden Stützfläche der Stützelemente 16, 16a weiter zu reduzieren, sind bei der Ausführungsform nach Fig. 4 statt der Gleitelemente 16 (Fig. 2) Rollelemente 16a vorgesehen. Hierzu sind zwei Rollen vorgesehen, die in entsprechenden kleinen Lagerböcken an der Unterseite der Ladebodenplatte 4 gelagert sind und den Griffbereich 5 beidseitig flankieren. Im Übrigen entspricht die Ausführungsform nach Fig. 4 der Ausführungsform nach Fig. 2, so dass zur Vermeidung von Wiederholungen auf die Beschreibung zur Fig. 2 verwiesen wird.

## Patentansprüche

1. Ladegutsicherungsvorrichtung für einen Laderaum eines Kraftfahrzeugs mit einer Trägeranordnung, die eine flache Erstreckung längs und quer des Laderaumes aufweist, und die in wenigstens zwei zueinander parallelen Lastschienen innerhalb des Laderaumes längs eines Laderaumbodens verschiebbar gelagert ist, wobei jeder Lastschiene wenigstens ein Führungsschlitten zugeordnet ist, die gemeinsam die Trägeranordnung tragen, **dadurch gekennzeichnet, dass** die Führungsschlitten (8) über einen Teilbereich der Länge der Trägeranordnung (4) erstreckt sind, und dass radial - auf eine Längsachse der Lastschiene (3) bezogen - versetzt zu den Führungsschlitten (8) wenigstens ein Stützelement (16, 16a) im Bereich einer Unterseite der Trägeranordnung (4) vorgesehen ist, das - auf eine Längsachse der Lastschiene (3) bezogen - in axialem Abstand zu den Führungsschlitten (8) angeordnet ist, wobei das Stützelement (16, 16a) dazu vorgesehen ist, Kippmomente, die auf die Trägeranordnung (4) wirken, abzustützen.

2. Ladegutsicherungsvorrichtung nach dem Oberbegriff des Anspruchs 1 oder nach Anspruch 1, **dadurch gekennzeichnet, dass** jedem Führungsschlitten (8) stirnseitig eine Einführhilfe (11) zugeordnet ist, die über einen Stirnrand des Führungsschlittens (8) oder der Trägeranordnung (4) in Verlängerung zu dem Führungsschlitten (8) hinausragt, und die in ihrer Breite auf eine Breite einer korrespondierenden Führungsnut der Lastschiene (3) abgestimmt ist.

3. Ladegutsicherungsvorrichtung nach Anspruch 2, **dadurch gekennzeichnet, dass** die Einführhilfe (11) als mit dem jeweiligen Führungsschlitten (8) verbundener, formstabiler Fortsatz (11) gestaltet ist, dessen Breite etwas geringer ist als eine Breite einer Führungsnut der Lastschiene (3).

4. Ladegutsicherungsvorrichtung nach Anspruch 2 oder 3, **dadurch gekennzeichnet, dass** die Einführhilfe (11) mit wenigstens einem Rastelement (12) versehen ist, das eine in die Führungsnut eingetauchte Funktionsposition der Einführhilfe (11) formschlüssig sichert.

5. Ladegutsicherungsvorrichtung nach Anspruch 4, **dadurch gekennzeichnet, dass** das Rastelement (12) als federbelastet beweglicher Rastknopf ausgeführt ist.

6. Ladegutsicherungsvorrichtung nach Anspruch 1, **dadurch gekennzeichnet, dass** das wenigstens eine Stützelement als Gleitelement (16) oder als Rollelement (16a) ausgebildet ist.

7. Ladegutsicherungsvorrichtung nach Anspruch 6,**dadurch gekennzeichnet, dass** das wenigstens eine Stützelement (16, 16a) in einem mittleren Bereich der Trägeranordnung (4) vorgesehen ist.

8. Ladegutsicherungsvorrichtung nach Anspruch 7, **dadurch gekennzeichnet, dass** das wenigstens eine Stützelement (16, 16a) im Bereich einer Unterseite eines Griffbereiches (5) der Trägeranordnung (4) vorgesehen ist.

## Claims

1. Luggage securing device for a luggage compartment of a motor vehicle with a carrier arrangement which has a flat extent longitudinally and transversely to the luggage compartment, and which is movably mounted along a luggage compartment floor in at least two load rails parallel to one another inside the luggage compartment, where each load rail is assigned at least one guide slide to jointly support the carrier arrangement, **characterized in that** the guide slides (8) extend over part of the length of the carrier arrangement (4) and **in that** at least one support element (16, 16a) is provided in the area of an underside of the carrier arrangement (4) radially offset - relative to a longitudinal axis of the load rail (3) - to the guide slides (8) and is arranged - relative to a longitudinal axis of the load rail (3) - at an axial distance from the guide slides (8), where the support element (16, 16a) is intended to brace against tilting moments acting on the carrier arrangement (4).

2. Luggage securing device according to the preamble of Claim 1 or according to Claim 1, **characterized in that** each guide slide (8) is assigned at its end with an insertion aid (11) projecting beyond an end rim of the guide slide (8) or the carrier arrangement (4) in an extension to the guide slide (8) and corresponding in width to a width of a corresponding guide profile of the load rail (3).

3. Luggage securing device according to Claim 2, **characterized in that** the insertion aid (11) is designed as a form-stable extension (11) connected to the respective guide slide (8) and whose width is slightly less than a width of a guide groove of the load rail (3).

4. Luggage securing device according to Claim 2 or 3, **characterized in that** the insertion aid (11) is provided with at least one engagement element (12) that positively secures a function position of the insertion aid (11) inserted into the guide groove.

5. Luggage securing device according to Claim 4, **characterized in that** the engagement element (12) is designed as an engaging button movable with spring loading.

6. Luggage securing device according to Claim 1, **characterized in that** the at least one support element is designed as a glide element (16) or as a roller element (16a).

7. Luggage securing device according to Claim 6, **characterized in that** the at least one support element (16, 16a) is provided in a central area of the carrier arrangement (4).

8. Luggage securing device according to Claim 7, **characterized in that** the at least one support element (16, 16a) is provided in the area of an underside of a handle area (5) of the carrier arrangement (4).

## Revendications

1. Dispositif de fixation d'une charge pour un coffre d'un véhicule automobile avec un dispositif porteur qui présente une extension plate longitudinalement et transversalement au coffre, et qui est monté de manière à pouvoir être déplacé sur au moins deux rails de charge parallèles à l'intérieur du coffre le long du plancher, sachant qu'à chaque rail de charge est associé au moins un chariot de guidage qui portent ensemble le dispositif porteur, **caractérisé en ce que** les chariots de guidage (8) sont étendus sur une partie de la longueur du support (4), et qu'est prévu radialement, par rapport à un axe longitudinal du rail de charge (3), en décalage par rapport aux chariots de guidage (8), au moins un élément d'appui (16, 16a) dans la zone d'une face inférieure du dispositif porteur (4), lequel élément est disposé, par rapport à un axe longitudinal du rail de charge (3), à une certaine distance axiale des chariots de guidage (8), sachant que l'élément d'appui (16, 16a) est prévu pour supporter des couples de renversement agissant sur le dispositif porteur (4).

2. Dispositif de fixation d'une charge selon le préambule de la revendication 1 ou selon la revendication 1, **caractérisé en ce qu'**à chaque chariot de guidage (8) est associé sur la face frontale un dispositif (11) facilitant l'introduction qui dépasse d'un bord frontal du chariot de guidage (8) ou du dispositif porteur (4) en prolongement du chariot de guidage (8), et dont la largeur est adaptée à une largeur d'une rainure de guidage correspondante du rail de charge (3).

3. Dispositif de fixation d'une charge selon la revendication 2, **caractérisé en ce que** le dispositif (11) facilitant l'introduction est conçu sous forme de prolongement (11) indéformable relié au chariot de guidage correspondant (8), prolongement dont la largeur est légèrement inférieure à une largeur d'une rainure de guidage du rail de charge (3).

4. Dispositif de fixation d'une charge selon la revendication 2 ou 3, **caractérisé en ce que** le dispositif (11) facilitant l'introduction est doté d'au moins un élément d'accrochage (12) qui assure par liaison de forme une position fonctionnelle, enfoncée dans la rainure de guidage, du dispositif (11) facilitant l'introduction.

5. Dispositif de fixation d'une charge selon la revendication 4, **caractérisé en ce que** l'élément d'accrochage (12) est conçu sous forme de bouton d'arrêt mobile commandé par ressort.

6. Dispositif de fixation d'une charge selon la revendication 1, **caractérisé en ce que** l'au moins un élément d'appui est conçu sous forme d'élément coulissant (16) ou d'élément roulant (16a).

7. Dispositif de fixation d'une charge selon la revendication 6, **caractérisé en ce que** l'au moins un élément d'appui (16, 16a) est prévu dans une zone centrale du dispositif porteur (4).

8. Dispositif de fixation d'une charge selon la revendication 7, **caractérisé en ce que** l'au moins un élément d'appui (16, 16a) est prévu dans la zone d'une face inférieure d'une zone de préhension (5) du dispositif porteur (4).
